# EUROPÄISCHE PATENTSCHRIFT

(11) **EP 3 044 476 B1**
(45) Veröffentlichungstag und Bekanntmachung des Hinweises auf die Patenterteilung: **19.12.2018**
(21) Anmeldenummer: 14790491.6
(22) Anmeldetag: 09.09.2014
(51) Int. Cl.: F16G 5/06, F16G 5/20

(54) **ENDLOS-KRAFTÜBERTRAGUNGSRIEMEN UND VERFAHREN ZU SEINER HERSTELLUNG**
CONTINUOUS FORCE-TRANSMISSION BELT AND PROCESS FOR THE PRODUCTION THEREOF
COURROIE DE TRANSMISSION DE PUISSANCE SANS FIN ET PROCÉDÉ POUR SA FABRICATION

(30) Priorität: 12.09.2013 DE 102013015047
(43) Veröffentlichungstag der Anmeldung: 20.07.2016
(73) Patentinhaber: Arntz Beteiligungs GmbH & Co. KG, 37671 Höxter (DE)
(72) Erfinder: HAZIM, Salem, 37671 Höxter (DE); LOTZ, Florian, 37647 Brevörde (DE)
(74) Vertreter: Lins, Martina
(86) Internationale Anmeldenummer: PCT/DE2014/000466
(87) Internationale Veröffentlichungsnummer: WO 2015/035973

(56) Entgegenhaltungen:
- EP-A2- 2 000 702
- WO-A1-2007/117690
- WO-A1-2009/034748

## Beschreibung

Die Erfindung betrifft ein Herstellungsverfahren für einen Endlos-Kraftübertragungsriemen in Form eines Keilriemens oder Keilrippenriemens sowie den auf diese Weise hergestellten Kraftübertragungsriemen selbst.

Endlos-Kraftübertragungsriemen bestehen prinzipiell aus einem von der Kraftübertragungsseite abgewandten Riemenrücken und einem Grundkörper, an dem eine Kraftübertragungszone ausgebildet ist. Der Grundkörper kann hierfür keilförmig ausgebildet sein oder mehrere Rippen aufweisen. Das gewählte Profil ist auf die den Riemen aufnehmende Riemenscheibe genau abgestimmt. Die Kraftübertragung erfolgt in erster Linie über die Flanken des Keils oder der Rippen. Zwischen dem Grundkörper und dem Riemenrücken sind in der Regel Festigkeitsträger oder Zugträger angeordnet, die aus einzelnen Strängen oder Corden oder auch aus Flächengebilden bestehen können. Es sind verschiedene Zugträgermaterialien im Einsatz, darunter Stahl, Glas, Carbonfasern, Kunstfasern und Naturfasern. Falls elastische Zugträger gewünscht werden, werden häufig Polyester- oder Polyamidzugträger verwendet. Die Grundkörper bestehen in der Regel aus elastomeren Materialien, in Einzelfällen sind auch Thermoplaste im Einsatz. Der Riemenrücken besteht in der Regel ebenfalls aus elastomeren Materialien oder Thermoplasten. Sowohl Riemenrücken wie auch Grundkörper können mehrschichtig aufgebaut sein und äußere Deckschichten besitzen. Sowohl kraftübertragungsseitig wie auch riemenrückenseitig sind für viele Anwendungen Textilauflagen und/oder Folienauflagen in Gebrauch. Die Zugträger befinden sich häufig in einem gesonderten Einbettungsmaterial, das die Zugträger gut umschließen und in dem Riemen verankern soll. Das Einbettungsmaterial kann ein Elastomermaterial, ein Thermoplast, aber auch ein Harz sein. Wesentlich ist, dass sich die ggf. unterschiedlichen Materialien für Riemenrücken, Einbettung und Grundkörper gut miteinander verbinden, um ein Versagen des Riemens unter Last zu vermeiden.

Für manche Anwendungen sind Zugträger gewünscht, die weniger elastisch sind und sich möglichst wenig dehnen. Für diese Anwendungen wurden so genannte "Hochmodul-Festigkeitsträger" entwickelt. Die Dehnfähigkeit dieser Hochmodul-Festigkeitsträger ist sehr klein. Beispiele für Hochmodulcorde sind solche aus Carbon, Glas, Stahl oder Aramid.

### Herstellungsverfahren im Stand der Technik

Endlos-Kraftübertragungsriemen mit profilierten Kraftübertragungszonen können grundsätzlich auf verschiedene Weise hergestellt werden. In der Regel werden zunächst schlauchförmige Rohlinge gefertigt, die anschließend zu den einzelnen, ringförmigen Endlosriemen geschnitten werden. Es ist auch möglich, die Riemen aus einem bandförmigen Material herzustellen, das abschließend zu dem Endlosriemen zusammengefügt wird, hierbei entsteht jedoch eine Naht, die häufig unerwünscht ist. Die Erfindung bezieht sich daher ausschließlich auf Endlosriemen, die aus schlauchförmigen Rohlingen erhalten werden.

Das gewünschte Profil auf der Kraftübertragungsseite kann grundsätzlich auf zweierlei Weise an dem Rohling ausgebildet werden: entweder in einem Schleifverfahren oder mit einem Formverfahren. Bei den Schleifverfahren wird das Profil aus einer genügend mächtigen Schicht herausgeschnitten, bei den Formverfahren wird das Profil unter Wärme und Druck in die für den Grundkörper vorgesehene Schicht eingeprägt.

Der Rohling, der hier in einem Formverfahren weiterverarbeitet werden soll, wird auf folgende Weise hergestellt:
Auf eine so genannte Riemenaufbautrommel werden zunächst ein oder mehrere Lagen für den späteren Riemenrücken aufgebracht. Anschließend erfolgt das Aufbringen von Festigkeitsträgern bzw. Zugträgern um diese Lage oder Lagen herum. Bei strangförmigen Zugträgern werden diese bevorzugt um die Riemenrückenlagen gespult, d.h. spiralförmig herumgeführt. Flächige Festigkeitsträger können von einer Rolle abgewickelt und ein- oder mehrlagig um die vorgegebenen Riemenrückenlagen herumgelegt werden. Nach dem Aufbringen der Zugträgerlage erfolgt das Aufbringen der ein- oder mehreren Schichten für den Grundkörper. Der Rohling enthält also alle erforderlichen Materialien. Diesen Rohling bezeichnet man auch als Konfektionswickel. Er wird anschließend geformt. Abschließend werden die Riemen vereinzelt. Für die Riemenelastomere sind in dem Rohling häufig Kautschukschichten vorhanden, die beim Formen in der Hitze vulkanisiert werden. Es können jedoch auch andere elastomere Materialien vorgesehen sein, beispielsweise thermoplastische Elastomere. Für Spezialanwendungen können auch bestimmte Thermoplaste als Riemenmaterialien eingesetzt werden.

Der Rohling wird dann von der Riemenaufbautrommel abgenommen und in eine beheizbare Autoklaventrommel zur Formgebung und ggf. Vulkanisation eingebracht. Dabei besitzt der trommelförmige Kessel an seiner Innenwand ein Profil, das in die Außenwand des schlauchförmigen Rohlings eingeprägt wird. Der erforderliche Druck wird dabei vom Trommelinneren her mit Hilfe eines Balgs über eine ausdehnbare Manschette auf die Innenwand des schlauchförmigen Rohlings aufgebracht. Der schlauchförmige Rohling wird radial nach außen gegen die Wand des Vulkanisations- und Formkessels gedrückt, sodass das Profil sich einprägen kann. Hierfür ist eine Umfangs- und Durchmessererweiterung des Rohlings erforderlich.

Wird der Druck von Innen pneumatisch mit einem Balg aufgebracht, so spricht man auch von einem "Airbag-Verfahren".

Aus der vorstehenden Beschreibung des Airbag-Verfahrens wird deutlich, dass damit nur Zugträger verarbeitbar sind, die eine gewisse Dehnfähigkeit mit sich bringen, wie z.B. Polyester- oder Polyamid-Fasercorde. Derartige elastische Kunstfasercorde können die erforderliche Umfangsdehnung des schlauchförmigen Rohlings beim Prägen mitmachen. Die Dehnung ist notwendig, damit die Corde in der Prägephase die richtige Cordlage erreichen. Bei der Konfektion des Rohlings auf der Riemenaufbautrommel liegen die dehnbaren Corde noch nicht in der korrekten Endposition. Der Umfang des Rohlings und dessen Durchmesser sind geringer als beim geprägten Produkt. Erst während der Prägephase im Vulkanisationskessel werden sie durch den Manschettendruck in die korrekte Endposition gedrückt bzw. gedehnt. Die Dehnung von Hochmodul-Corden bzw. allgemein von nicht oder wenig dehnbaren Materialien ist für das Airbag-Formgebungsverfahren zu gering, als dass sich die richtige Cordlage im Endprodukt erreichen ließe. Eine ausreichende Dehnung per Manschettendruck ist nicht möglich.

Riemen mit Hochmodul-Corden können bislang sinnvoll und ökonomisch nur im Auma- und im Schleifverfahren hergestellt werden. Die Herstellung im Formverfahren brächte jedoch verschiedene Vorteile mit sich. Zunächst beträgt die Materialersparnis beim Formverfahren gegenüber einem Schleifverfahren bis zu 30 %. Die Ersparnis ist bei groben Profilrillen besonders ausgeprägt. Geschliffene Riemen zeigen stets ein frühes lokales Maximum im Schlupf-Leistungs-Diagramm. Riemen, die im Airbag-Formverfahren hergestellt wurden, zeigen diesen Nachteil nicht und haben gleichzeitig eine hohe Laufleistung bei hohem Leistungserhalt bis zum Ende (weniger Schlupf).

Ein Formverfahren für Riemen mit Zugträgern, die eine geringe Dehnfähigkeit aufweisen, wie insbesondere Hochmodul-Zugträger, wäre daher sehr vorteilhaft.

Bereits die DT 26 43 529 A1 setzt sich mit der formgebenden Herstellung eines Treibriemens mit schwer dehnbaren Stapellängen-Verstärkungen auseinander. Derartige Stapellängen-Zugteile hätten die unerwünschte Neigung, Beulen zu bilden, wenn die Vernetzung zwischen einem Kern und einem elastomeren Luftsack oder einer Blase erfolgte, die um die Riemenhülse herum angeordnet sei. Die DT 26 43 529 A1 sieht deshalb vor, dass auf den Riemenrohling gleichzeitig ein nach außen und ein nach innen gerichteter Druck ausgeübt wird, während die Vulkanisation und das Formen durchgeführt werden. Hierdurch werden die Zugteile während der Formung und Vernetzung des noch fließfähigen oder plastischen vulkanisierenden Kautschukmaterials am Ort und gleichzeitig unter Spannung gehalten. Die Formung geschieht um die Zugträger herum, die selbst nicht entscheidend gedehnt werden.

Das Verfahren nach der DT 26 43 529 A1 erfordert eine sehr genaue Abstimmung der verschiedenen Drücke und eine genaue Positionierung der Materialien in der Form. Das Verfahren wird dadurch relativ aufwändig. Durch den Gegendruck geschieht ein weitgehender Druckausgleich, sodass die Zugträger drucklos oder nur unter geringem Druck gehalten werden. Dies bringt teilweise Fertigungsungenauigkeiten mit sich, die sich aus geringen Druckverschiebungen nach außen oder innen ergeben können.

Die WO 2007/117690 A1 beschreibt einen Kraftübertragungsriemen sowie ein Herstellungsverfahren für denselben, wobei die äußerste Schicht des Riemens auf der Kraftübertragungsseite Vliesmaterial beinhaltet, welches zumindest zum Teil aus Acrylfasern besteht. Weiterhin wird beschrieben, dass der Riemen Zugträger-Elemente aufweist, die zwischen zwei elastomeren Schichten angeordnet sind. Der Kraftübertragungsriemen wird durch ein Prägeverfahren aus einem geschichteten Vorprodukt durch Druck und Hitze gegen eine Profilform ausgeformt. Die Zugträgerlage kann von dem elastomeren Material derart durchdrungen sein, dass sich dieses in Richtung des bei der Herstellung ausgeübten Drucks in Form von Ausbuchtungen zwischen den Zugträger-Elementen befindet.

Die WO 2009/034748 A1 beschreibt ebenfalls einen Kraftübertragungsriemen und ein entsprechendes Herstellungsverfahren, wobei der Riemen wiederum aus einem geschichteten Vorprodukt ausgeformt wird und Zugträger-Elemente beinhaltet. Die Zugträgerlage kann analog zur WO 2007/117690 von elastomerem Material durchdrungen sein.

Die EP 2 000 702 A9 offenbart einen Kraftübertragungsriemen, der CordStränge beinhaltet, die in Längsrichtung verlaufen und in eine GummiMischung eingebettet sind. Auf dieser Gummilage ist zumindest zur Kraftübertragungsseite hin ein härteres Material angeordnet und mit der Gummilage verbunden. Die Gummimischung ist derart ausgewählt, dass an ihr, unter bestimmten Temperatur und Zugbedingungen, eine definierte Zugbelastung angreift. Die Auswahl einer solchen Gummimischung soll der langlebigeren Verbindung zwischen der Gummilage und der Lage aus härterem Material dienen.

Die Aufgabe der Erfindung besteht darin, ein neues formgebendes Verfahren für die Herstellung von Endlos-Kraftübertragungsriemen mit Zugträgern mit geringer Dehnbarkeit zur Verfügung zu stellen und dabei die Nachteile im Stand der Technik möglichst weitgehend zu vermeiden, und neue, interessante Riemenprodukte mit Hochmodul-Zugträgern zu ermöglichen.

Die Aufgabe wird mit Hilfe des Verfahrens nach Anspruch 1 und des Endlos-Kraftübertragungsriemens nach Anspruch 7 gelöst.

Das erfindungsgemäße Verfahren gemäß Anspruch 1 stellt ein Formverfahren, insbesondere ein Airbag-Formverfahren, zur Herstellung eines profilierten Endlosriemens in Form vorzugsweise eines Keil- oder Keilrippenriemens dar, das Riemen mit Zugträgern geringer Dehnbarkeit und ausgezeichneten Lauf- und Haltbarkeitseigenschaften ergibt. Der schlauchförmige Rohling für das Verfahren umfasst wenigstens zwei Riemenmaterialschichten und eine Lage aus Zugträgern zwischen diesen beiden Riemenmaterialschichten. Der Aufbau des Rohlings von außen (profilseitig) nach innen (riemenrückseitig) ist wie folgt:
a) eine Schicht aus einem Riemenmaterial (M1) für die äußerste rippenseitige Riemenprofilzone des Grundkörpers
b) eine Lage aus Zugträgern mit geringer Dehnfähigkeit,
c) eine Schicht aus einem Riemenmaterial (M2), das unter den Formbedingungen eine solche Viskosität besitzt, die ausreicht, das Riemenmaterial (M2) durch Zwischenräume zwischen den Zugträgern zu drücken und dabei eine Zugträger-Einbettung zu bilden.

Erfindungsgemäß ist das Riemenmaterial (M2) in einer solchen Menge in dem Rohling vorhanden und wird während des Formens so weit durchgedrückt, dass ein Teil des Riemenmaterials (M2) nach dem Formvorgang einen Grundkörperbereich innerhalb des Keils oder der Rippen bildet. Die Zugträger-Einbettung und der Grundkörperbereich, der aus der durchgedrückten Schicht aus M2 gebildet wird, bilden eine einheitliche, grenzflächenfreie Zone.

Ein Charakteristikum des erfindungsgemäßen Verfahrens ist es, dass das Material (M2) aus einer zunächst riemenrückseitig angeordneten Materialschicht im Rohling teilweise und vorzugsweise in erheblichem Maße durch die Zugträgerlage hindurchgedrückt wird, um so einen Teil des Riemengrundkörpers mit zu formen. Es entsteht an dem so hergestellten Endlosriemen eine Zone aus einheitlichem Material, die die Zugträgereinbettung, einen darin angrenzenden Grundkörperbereich und ggf. einen Riemenrückenbereich umfasst, wobei diese Zone einheitlich ist. Es bestehen keine Grenzschichten zwischen Zugstrangeinbettung und unterster Riemenrückenschicht sowie zwischen Zugstrangeinbettung und Riemengrundkörper, an der aufgrund starker Zugkräfte bzw. Scherkräfte während des Betriebs die Bruch- oder Reißneigung erhöht sein könnte.

Das einheitliche Material (M2) muss für die Durchführung des Verfahrens unter den Bedingungen während des Formvorgangs so viskos sein, dass es durch die Zugträgerlage hindurchgedrückt werden kann. Dieses Material kann besondere mechanische Eigenschaften aufweisen, die es von einem Grundkörpermaterial für die Außenschicht unterscheiden. Es handelt sich erfindungsgemäß um ein weicheres Material, das dem Riemen bei seiner Performance mehr Dynamik und Flexibilität verleiht. Demgegenüber ist das Material der äußeren Grundkörperschicht M1 ein relativ härteres Material mit größerer Abriebbeständigkeit.

Das Hindurchpressen einer größeren Menge des zunächst riemenrückenseitig platzierten Materials M2 durch die Zugträgerlage ermöglicht die Herstellung von groben Profilen, wie z.B. den Standardprofilen PL und PM, die sonst nicht im Airbagverfahren mit Hochmodul-Corden gefertigt werden könnten. Das Material M2 wird nicht nur zwischen die Zugträger gedrängt, sondern über einen gewissen Zeitraum fortlaufend durch die Zugträgerlage transportiert. Durch den gleichmäßigen Druck des Balgs von innen radial nach außen werden die Zugträger unter einen gleichmäßigen Druck gesetzt, der die gesamte Lage gleichmäßig nach außen spannt und sehr exakt konzentrisch zum Umfang positioniert. Durch das Umfließen vom Material M2 werden die Zugträger optimal eingebettet.

Das Volumenverhältnis der Riemenmaterialien M1 und M2 zueinander beträgt dabei von 10:90 bis 80:20. Der Anteil des Materials M2, der durch die Zugträger bis in den Grundkörperbereich hindurchgedrückt wird, beträgt vorzugsweise wenigstens 30 %, weiter vorzugsweise wenigstens 50 % bei größeren Keilrippenriemen ab einer Riemengesamthöhe von ca. > 5 mm und einer Rippenweite ab ca. > 2,5 mm (Standardrippenriemenprofile PL, PM und ggf. größer). Der Anteil des Materials M2 kann vorzugsweise bis zu 90 % betragen (alle Angaben in Vol.-%), für die kleinen Profile bis ca. 5 mm Riemengesamthöhe und Rippenhöhe bis ca. 2,5 mm (Standardrippenprofile bis PK) bevorzugt bis 30 %, für die großen Profile bevorzugt bis 70 %, weiter bevorzugt bis 90 %.

Aufgrund der Profilgeometrie wird das erfindungsgemäße Verfahren dazu führen, dass sich das Material der äußeren Schicht M1 immer an die Form anlegt und diese gewissermaßen auskleidet, während das durchgedrückte Material M2 dieser Form folgt, sich also zu den einzelnen Rippen oder Zähnen oder in den Keil hin vorwölbt. Diese Kernbildung durch das Riemenmaterial M2 innerhalb des Grundkörpers hinter den kraftübertragenden Flanken wirkt sich vorteilhaft auf die mechanischen Eigenschaften des fertigen Riemens aus. Der Effekt ist umso größer, je höher der relative Anteil des Materials M2 ist, und kommt in erster Linie bei großen Profilen zum Tragen.

Das Material M1 wird dem Verwendungszweck entsprechend gewählt und beeinflusst unter anderem die mechanischen Eigenschaften des Riemens in hohem Maße. Das Material M1 kann beispielsweise hinsichtlich der Abriebbeständigkeit und für einen guten Reibbeiwert oder das Vorhandensein einer elektrischen Leitfähigkeit optimiert werden.

Das Material M2 sorgt als ein eingebettetes, weicheres Material für mehr Riemenflexibilität, reduziert dadurch die Eigenerwärmung des Riemens bei Betrieb und verbessert im Zusammenwirken mit M1 die Laufeigenschaften und die Laufleistung.

Als Zugträger werden im Rahmen dieser Erfindung generell solche mit geringer Dehnfähigkeit eingesetzt. Bevorzugt sind dies Hochmodul-Zugträger. Die Hochmodul-Zugträger können als durchlässiges, den Materialfluss von M2 erlaubendes Flächengebilde vorliegen, beispielsweise als Gewebe oder Vlies, bevorzugt werden als Zugträger Corde verwendet. Die einzelnen Corde bestehen vorzugsweise aus verzwirnten und zum Cord geschlagenen Materialfäden. Die Zugträger sind in jedem Falle vorzugsweise aus Carbon, Aramid, Stahl, Glas oder PBO-Fasern (PBO = Poly(paraphenylen-2,6-benzobisoxazol)). Diesen bevorzugten Materialien können weitere Materialien bzw. Fasern zugemischt sein. Fasern aus den bevorzugten Materialien können mit anderen Fasern verzwirnt, verflochten oder anders kombiniert sein.

Die Zugträgerlage kann aus einzelnen Strängen bestehen. Es kann sich also beispielsweise um eine gespulte Cordlage handeln. Die Zugträgerlage kann jedoch auch flächig ausgebildet sein, beispielsweise in einer vorzugsweise groben Textilstruktur, die das Durchdrücken des Materials M2 ermöglicht. Gerade wenn die Zugträgerlage aus einzelnen Strängen besteht, kann es vorteilhaft sein, sie einseitig oder beidseitig mit einer netzförmigen oder gitterförmigen Auflage abzudecken. Dies kann ggf. die Genauigkeit der Positionierung der Zugträger erhöhen. Die Zugträgerlage kann auch aus Corden bestehen, die durch Stege stabilisiert worden sind. Derartige Corde sind beispielsweise unter dem Namen "Multicord" kommerziell erhältlich. Dabei ist ein Cordpaket aus Kettfäden durch Schussfäden verbunden, die Stege zwischen den Cordsträngen bilden.

In bevorzugten Ausführungsformen sind die Riemenmaterialien M1 und M2 vulkanisierbare Kautschukmaterialien und die Zugträgerlage besteht aus Aramid- oder Carbon-Festigkeitsträgern.

In Weiterbildung der Erfindung ist vorgesehen, dass auf die Schicht aus dem Riemenmaterial M2 zur Riemenrückenseite hin wenigstens eine weitere Schicht aufgebracht wird, um den Rohling zu bilden. Es kann sich dabei um ein weiteres Riemenmaterial oder um eine Auflage beispielsweise aus einer Folie oder einem Textil handeln. Die zusätzliche Schicht kann eine Stützfunktion im Riemen bilden, insbesondere dann, wenn das Riemenmaterial M2, welches darunter liegt, besonders weich ist. Die weitere Schicht bildet mit dem nicht durchgedrückten Rest des Riemenmaterials M2 gemeinsam den Riemenrücken des fertig geformten Riemens. Eine Textil- oder Folienauflage kann auch zusätzlich zu dieser Schicht außen auf den Riemen aufgebracht werden.

Das Volumenverhältnis der Riemenmaterialien M1 und M2 zueinander ist 10:90 bis 80:20. Dies bedeutet, dass ein sehr großer Teil des Grundkörpers von dem durchgedrückten Riemenmaterial M2 gebildet werden kann. Das Riemenmaterial M1 bildet dann lediglich noch eine die Prägeform auskleidende Außenschicht, die am fertigen Riemen die Kraftübertragungszonen abdeckt. Der Grundkörper kann jedoch im anderen Extrem auch größtenteils von dem Material M1 gebildet werden, solange das Material M2 über die reine Cordeinbettungszone hinaus in den Grundkörper hineinreicht.

In einem Sonderfall können die Riemenmaterialien M1 und M2 gleich sein, wobei das Gesamtmaterial dann ein Material M2 ist, welches den Bedingungen der hinreichend kleinen Viskosität für das Durchdrücken des Materials durch die Zugträger während des Formvorgangs genügen muss.

Gemäß einem ersten Aspekt der Erfindung ist zumindest das Riemenmaterial M1 ein vulkanisierbares Material, das während des Formens unter Wärme und Druck in der Vulkanisationstrommel des Airbag-Verfahrens ausvulkanisiert. Bei dem Material M2 kann es sich dann entweder ebenfalls um ein vulkanisierbares Material handeln oder um einen Thermoplasten oder ein thermoplastisches Elastomer.

Besonders bevorzugt ist es jedoch, wenn die Riemenmaterialien M1 und M2 beides vulkanisierbare Materialien sind, die sich in Bezug auf ihre Eigenschaften unterscheiden. Beide Materialien werden dann während des Formens unter Wärme und Druck vulkanisiert und verbinden sich an ihrer Grenzfläche. Hierfür ist es sehr vorteilhaft, wenn die Materialien M1 und M2 derselben Kautschuk- bzw. Elastomerklasse angehören.

In bevorzugten Ausführungsformen kann beispielsweise das Material M2 ein weiches, besonders elastisches gut haftendes Kautschukelastomer sein und das Material M1 ein härteres Kautschukelastomer, das beispielsweise Vorteile bezüglich Abrieb, Reibbeiwert und Formstabilität bringt.

In besonders bevorzugten Ausführungsformen der Erfindung kann beispielsweise der Fluss des Materials M2 durch die Cordebene hindurch so eingestellt werden, dass 10 bis 90 % des Grundkörpers (aus den Materialien M1 und M2) aus dem Material M2 besteht.

Die Aufgabe der Erfindung wird weiterhin gelöst durch einen Endlos-Kraftübertragungsriemen in Form eines Keilriemens oder Keilrippenriemens, der mit dem erfindungsgemäßen Verfahren erhältlich ist. Der erfindungsgemäße Kraftübertragungsriemen zeichnet sich dadurch aus, dass das die Zugträger einbettende Material M2 zusätzlich einen Teil des Grundkörpers bildet, der bis in die einzelnen Rippen bzw. den Keil hineinragt. Das Zugträgereinbettungsmaterial und das in den Grundkörper hineinragende Material bilden eine einheitliche Zone ohne Grenzfläche. In besonderen Ausführungsformen kann diese Zone auch einen Teil des Riemenrückens mit umfassen. Bei der Zone aus dem Rohlingsmaterial M2 handelt es sich dann um eine endlose, nahtfreie Schicht mit Auswölbungen an den Positionen der Rippen bzw. einer Auswölbung in Richtung des Keils. Die Auswölbung kann so stark sein, dass sie einen Kern innerhalb der Rippen oder des Keils bildet. Dies ist dann der Fall, wenn das Verhältnis M1 zu M2 eher klein ist, beispielsweise 10:90.

Die für das erfindungsgemäße Verfahren beschriebenen bevorzugten Ausführungen finden sich in dem fertigen Riemenprodukt wieder. Zum Beispiel verhalten sich die Volumenverhältnisse der Vulkanisate aus den Riemenmaterialien M1 und M2 des Rohlings zueinander wiederum im Verhältnis von 10:90 bis 80:20. Auf der Rückenseite kann auf dem vulkanisierten Riemenmaterial M2 eine weitere Schicht aufliegen, beispielsweise aus einem weiteren Riemenmaterial M3, einem thermoplastischen Material, z.B. einer Folie oder einem Textil. Allgemein kann auf dem Riemenrücken aus beliebig vielen Schichten zusätzlich eine Textilschicht aufliegen.

Auch die Abdeckung der Kraftübertragungsseite mit einer Textilauflage ist ohne weiteres möglich. Ebenso kann der Rücken zusätzlich abgedeckt werden.

Der Kraftübertragungsriemen nach der Erfindung enthält die oben bereits genannten wenig dehnfähigen Zugträger.

Weitere Materialien können innerhalb des Riemens vorhanden sein. Beispielsweise können in bestimmte Schichten Kurzfasern eingearbeitet sein, es können Farbkennungen angebracht sein usw.. Auch zwischen den Riemenmaterialien M1 und M2 können neben den Zugträgern noch andere Schichten vorhanden sein. Die im Rohling außen liegende Schicht für die äußerste rippenseitige Riemenprofilzone kann mit weiteren Schichten hinterlegt sein, bzw. die Schicht zu M1 kann durch mehrere Schichten ersetzt werden.

Die erfindungsgemäßen Riemen zeigen ein optimales Preis-Leistungsverhältnis; sie besitzen gute dynamische Eigenschaften, gute Leistungsübertragungswerte, gute Laufleistungen und neigen weniger zu Bruch- und Rissbildung.

Im Folgenden wird die Erfindung anhand eines Ausführungsbeispiels im Zusammenhang mit den Zeichnungen näher erläutert.

In der Zeichnung zeigen:
- Figur 1 -: die Schichtenfolge des Rohlings im Prägekessel als Ausschnitt einer schematischen Querschnittsansicht - Figur 1a nach Einlegen, vor dem Prägen, Figur 1b nach dem Druckanlegen, eingepresst in die Form;
- Figur 2 -: eine vereinfachte Schnittansicht aus Vulkanisationskesselwand und eingelegtem Rohling - Figur 2a vor dem Druckaufbringen, Figur 2b nach dem Druckaufbringen in geformtem Zustand - mit einem nicht erfindungsgemäßen Rohling;
- Figur 3 -: eine Darstellung wie in Figur 2 mit einem erfindungsgemäßen Rohling, wiederum in Figur 3a vor dem Prägen und in Figur 3b nach dem Druckanlegen im geformten Zustand.

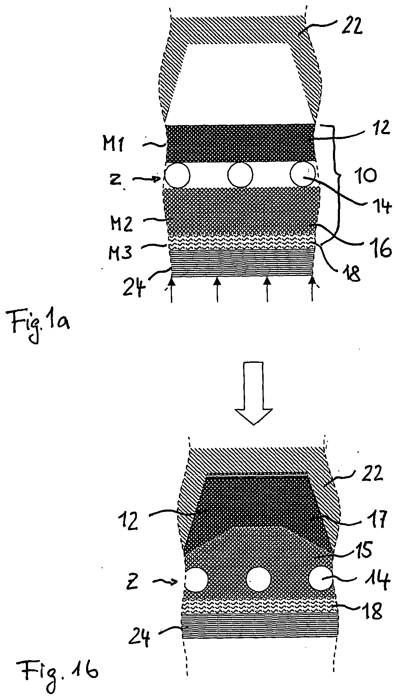

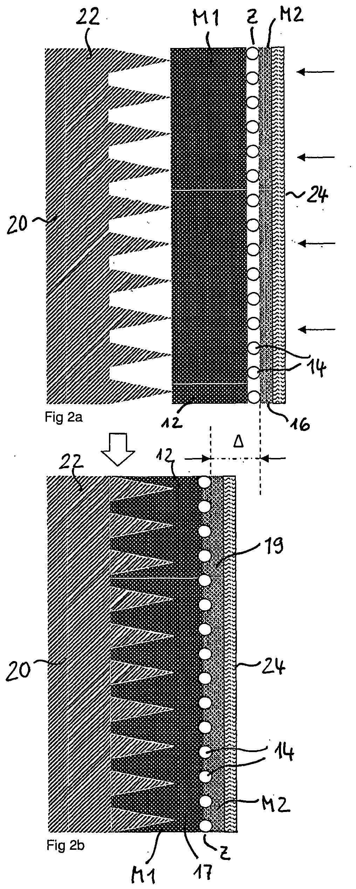

In den Abbildungen wird jeweils die erfindungsgemäße - in Figur 2 die nicht erfindungsgemäße - Formgebung eines Rohlings aus den drei grundsätzlichen Schichten: äußere Grundkörperschicht M1, Zugträgerlage Z, riemenrückenseitige Schicht M2 (durchzudrückende Schicht) und zusätzliche Riemenrückenschicht M3 gezeigt. Es wird ein Keilrippenriemen erzeugt, gezeigt ist jeweils ein Ausschnitt, in Figur 1 nur eine Rippe. Für die Darstellung der drei Verfahrensschritte kommt es auf die Materialien nicht an. Ein beispielhafter Materialaufbau ist jedoch weiter unten unter "Beispiel" besch rieben.

In Figur 1a ist der Rohling 10 in einen nicht näher dargestellten Vulkanisationskessel mit der profilgebenden Trommel 22 und der Manschette 24, über die der Prägedruck aufgegeben werden kann, eingelegt. Der im Ganzen mit 10 bezeichnete Rohling besteht aus der äußeren profilseitigen Schicht 12, die später die äußerste Schicht des Grundkörpers mit der Kraftübertragungszone bilden wird, der Zugträgerlage Z mit den einzelnen strangförmigen Zugträgern 14, der zunächst riemenrückenseitig angeordneten beim Formen durchzudrückenden Schicht 16 und der späteren Riemenrückenschicht 18. Die zur Manschette 24 weisenden Pfeile deuten den Druck an, der während des Formverfahrens vom Innern der Trommel 22 her radial nach außen aufgebracht wird. Unter Wärme und Druck verformt sich nun der Rohling, und es ergibt sich das in Figur 1b gezeigte Bild. Der Prägedruck hat die Schicht 12 in die Profilausnehmung der Trommel 22 gedrückt, sodass das Material M1 der Schicht 12 dem gesamten Flankenbereich und der Kraftübertragungszone des späteren Riemens zur Verfügung steht. Die Schicht 16 ist in der Wärme genügend fließfähig geworden, d.h. niedrigviskos genug, um unter dem Druck durch die Manschette 24 während des Formvorgangs durch die Lage mit den Zugsträngen 14 hindurchgedrückt zu werden, sodass sie nun an die verformte Schicht 12 angrenzt und einen Teil des Grundkörpers bildet. Aufgrund der Keil- oder Rippenform des Profils bildet die Schicht 16, die der auskleidenden Schicht 12 folgt, eine zum Keil oder der Rippe hin vorgewölbte Schicht bzw. einen Kern innerhalb des Keils oder der Rippe. In dem in Figur 1 gezeigten Beispiel erfolgt das Durchdrücken des Riemenmaterials M2 sehr vollständig, sodass die Riemenrückenschicht 18 am Ende des Formvorgangs direkt angrenzend an die Zugträgerlage Z mit den Corden 14 zu liegen kommt.

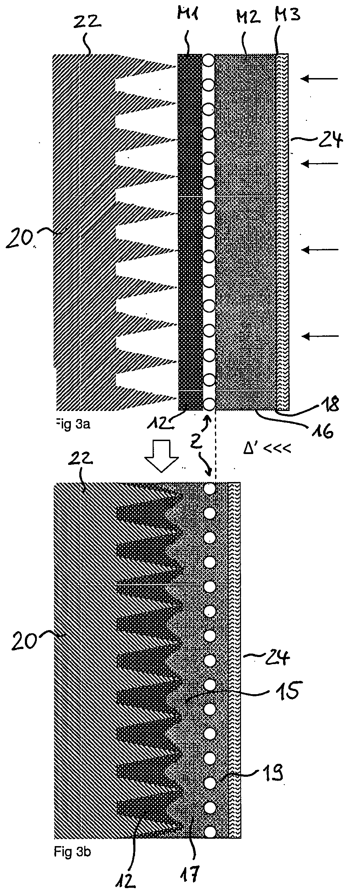

In den Figuren 2 und 3 wird nun näher dargestellt, wie die Erfindung es ermöglicht, dass die wenig dehnfähige Zugträgerlage während des Formvorgangs an ihrer Position verbleibt.

In Figur 2 ist zunächst ein nicht erfindungsgemäßer Rohling gezeigt, dessen Aufbau aus Figur 2a klar wird. Der Rohling in Figur 2a ist so ausgebildet, wie ein üblicher Rohling mit Kunstfaserzugsträngen, beispielsweise aus Polyamid oder Polyester. Der Rohling umfasst hier nur drei Schichten, nämlich die profilseitige Schicht aus dem Riemenmaterial M1, als Schicht 12, die Zugträgerlage Z mit gespultem Cord 14 und die riemenrückenseitig aufgebrachte Schicht aus dem Riemenmaterial M2. Während des Formverfahrens presst die Manschette 24, wie durch die Pfeile in Figur 2a angedeutet, den gesamten Rohling radial nach außen in Richtung auf die profilgebende Trommel 22 des Vulkanisationskessels 20. Dabei wird das gesamte Material nach außen bewegt und auch die relativ weit zum Riemenrücken hin angeordneten Zugstränge 14 müssen gedehnt werden, wie Figur 2b verdeutlicht. Figur 2b zeigt den Endzustand des Formvorgangs, wobei das Material M1 der Schicht 12 sich dem Profil der Trommel 22 angepasst und dabei Rippen ausgebildet hat. Das Material M2 umschließt nun die Cordstränge 14 und grenzt an das Material M1 der Schicht 12 an. Die Materialien M1 und M2 können hier gleich sein, sodass die Schicht 16 nicht mehr eigenständig in Erscheinung tritt. Es wird dann vielmehr ein einheitliches Riemenmaterial gebildet, in das die Cordstränge 14 eingebettet sind. Im vorliegenden Falle wird die Schicht 16 nicht vollständig oder fast vollständig durch die Cordstrangebene Z hindurchgedrückt. Auch wenn dies der Fall wäre, müssten die Cordstränge bei dieser Rohlinggeometrie beim Prägen nach außen gedehnt und verschoben werden. Das Maß der Verschiebung ist mit Hilfe der gestrichelten Linien, die die Cordstrangebene Z andeuten, verdeutlicht: es ist klar erkennbar, dass diese Ebene sich bei Vergleich der Figuren 2a und 2b durch das Formen sehr deutlich um den Betrag Δ verschoben hat. Das Airbag-Formgebungsverfahren ist daher für den in Figur 2 gezeigten Rohling nicht anwendbar, wenn wenig dehnfähige Cordstränge eingesetzt werden sollen.

Das erfindungsgemäße Beispiel aus Figur 1 ist nochmals ähnlich in Figur 3 gezeigt, wobei die besonderen Vorteile des Rohlingsaufbaus für das Airbag-Verfahren zutage treten. Abweichend vom Rohlingsaufbau aus Figur 1 besteht die profilseitige Schicht auf der Zugträgerlage Z aus einer äußeren Schicht 12 aus dem Material M1 und einer darunter liegenden Schicht 16' aus dem Material M2. Dieser Aufbau kann gewählt werden, wenn eine besonders dünne und dennoch gleichmäßige Außenschicht aus dem Material M1 auf einem ansonsten fast ausschließlich aus dem Material M2 bestehenden Grundkörper ausgebildet werden soll. Alternativ könnte die Schicht 16' hier auch fehlen, und die Schicht auf der Rückseite der Zugträgerlage könnte entsprechend dicker ausgebildet sein. Zusätzlich kommt riemenrückenseitig eine Schicht 18 hinzu, die vorliegend aus einem vulkanisierbaren Elastomermaterial M3 gebildet wird. Über die Manschette 24 wird nun wieder Druck radial nach außen in Richtung der Trommel 22 des Vulkanisationskessels 20 aufgebracht. Das Prägen mit Wärme und Druck führt zu dem Endzustand, wie er in Figur 3b gezeigt ist. Die Schicht 12 schmiegt sich an das Profil der Trommel 22 an, die Schicht 16 ist größtenteils durch die Zugträgerlage Z hindurchgedrückt worden, sodass die Schicht 18 direkt auf den Zugträgern zu liegen kommt, wobei das Material M2 die Zugträger einbettet und nicht von dem Material M3 verdrängt wurde. Die Schicht 16 bildet eine zusammenhängende Zone aus dem Material M2, das die Kraftübertragungszone mit dem Zugträgerbereich im ausgeformten Zustand grenzflächenfrei verbindet.

### BEISPIEL Rippenband Profil PL:

Für einen erfindungsgemäßen Rohling kann folgender Aufbau angegeben werden:
M1: CR (Chloroprene Rubber); Viskosität ML1 + 4/100 °C = ca. 45; Schichtdicke ca. 1,2 mm
M2: CR, ML1 + 4/100 °C = ca. 38; Schichtdicke ca. 2,4 mm
M3: Gewebe; Dicke ca. 0,5 mm

### Volumenverhältnis M1:M2 = 1:2

Aus den Materialien wird auf einer Aufbautrommel ein Riemenrohling gewickelt, der dem in den Figuren Gezeigten entspricht. Im vorliegenden Beispiel ist der Cord gespult und ohne begrenzende Netzschicht eingebracht.

Der nach Abnehmen von der Aufbautrommel erhaltene Konfektionswickel wird dann in eine Vulkanisationstrommel mit passendem Trommelinnenprofil eingelegt. In das Innere des schlauchförmigen Rohlings wird eine Manschette eingelegt, die den von einem luftgefüllten Balg aufgebrachten Druck weitergibt. Die durch den Balg mit Druck beaufschlagte Manschette drückt den Riemenrohling radial nach außen in die beheizte Vulkanisationstrommel. Unter Wärmen tritt der Formprozess ein, wie er anhand der Figuren beschrieben wurde. Schließlich wird bei anhaltender Wärme vulkanisiert.

Für die Herstellung des Beispielriemens wurde ein Vulkanisationskessel der Firma Eilhauer, Hannover verwendet.

Für weitere Beispiele kann der o.a. CR beispielsweise durch EPDM, BR, SBR oder ACSM ersetzt werden.

### Zusammenfassung

Der Endlos-Kraftübertragungsriemen in Form eines Keilriemens oder Keilrippenriemens mit Zugträgern geringer Dehnbarkeit wird in einem Formverfahren hergestellt, bei dem zunächst ein schlauchförmiger Rohling mit wenigstens zwei Riemenmaterialschichten und einer Lage aus Zugträgern aufgebaut und in einem nachfolgenden Schritt in einer Profil gebenden Trommel unter Wärme und unter Druck gegen das Profil der Trommel geformt wird. Dabei wird eine zunächst riemenrückenseitig von der Zugträgerlage aufgebrachte Schicht aus dem rückseitig angeordneten Riemenmaterial während des Formvorgangs unter Druck und Wärme durch die Zugträgerlage hindurch gedrückt, um im fertigen Riemen sowohl die Zugträger-Einbettung als auch einen Teil des Grundkörpers des Riemens zu bilden.

### Bezuqszeichenliste

- 10: Rohling
- 12: Schicht, äußere, rippenseitig (M1)
- 14: Zugträger
- 15: Grundkörperbereich aus M2
- 16: Schicht, rückenseitig (M2)
- 16': Schicht (M2)
- 17: Grundkörper
- 18: Schicht, Riemenrücken (M3)
- 19: Riemenrücken
- 20: Vulkanisationskessel
- 22: Trommel, profiliert
- 24: Manschette (Druckbeaufschlagung)

- Z: Zugträgerlage
- M1: erstes Riemenmaterial, äußere Grundkörperschicht
- M2: zweites Riemenmaterial, durchgedrückt, Zugträgereinbettung und Grundkörperkern
- M3: drittes Riemenmaterial, Riemenrückenschicht

## Patentansprüche

1. Verfahren zur Herstellung eines Keil- oder Keilrippen-Endlosriemens mit Zugträgern (14) geringer Dehnbarkeit in einem Formverfahren, bei dem zunächst ein schlauchförmiger Rohling (10) mit wenigstens zwei Riemenmaterialschichten (12, 16) und einer Lage (Z) aus Zugträgern (14) hergestellt wird, der in einem nachfolgenden Schritt in einer Profil gebenden Trommel (22) unter Wärme und unter Druck gegen das Profil der Trommel geformt wird, **gekennzeichnet durch** die Verwendung folgenden Schichtaufbaus in dem Rohling (10) von außen nach innen:
a) eine Schicht (12) aus einem Riemenmaterial M1 für die äußerste, rippenseitige Riemenprofilzone des Grundkörpers (17),
b) eine Lage (Z) aus Zugträgern (14) geringer Dehnfähigkeit,
c) eine Schicht (16) aus einem zu M1 relativ weicheren Riemenmaterial M2, das unter den Formbedingungen eine solche Viskosität besitzt, die gering genug ist, dass das Riemenmaterial M2 innerhalb des Formvorgangs durch Zwischenräume zwischen den Zugträgern (14) gedrückt wird und dabei eine Zugträger-Einbettung bildet,
wobei das Riemenmaterial M2 in einer solchen Menge in dem Rohling (10) vorhanden ist und während des Formens so weit durchgedrückt wird, dass ein Teil des Riemenmaterials M2 nach dem Formvorgang einen Grundkörperbereich (15) innerhalb des Keils oder der Rippen bildet, wobei das Volumenverhältnis der Riemenmaterialien M1 und M2 zueinander von 10:90 bis 80:20 beträgt.

2. Verfahren nach Anspruch 1 **dadurch gekennzeichnet, dass** als Zugträger (14) mit geringer Dehnfähigkeit Hochmodul-Zugträger aus Carbon, Aramid, Stahl, Glas oder PBO eingesetzt werden.

3. Verfahren nach Anspruch 1 oder 2, **dadurch gekennzeichnet, dass** die Zugträgerlage (Z) wenigstens einseitig mit einer netzförmigen oder gitterförmigen Auflage abgedeckt wird.

4. Verfahren nach einem der Ansprüche 1 bis 3, **dadurch gekennzeichnet, dass** auf die Schicht (16) aus dem Riemenmaterial M2 wenigstens eine weitere Schicht (18) aufgebracht wird.

5. Verfahren nach einem der Ansprüche 1 bis 4, **dadurch gekennzeichnet, dass** zumindest das Riemenmaterial M1 ein vulkanisierbares Material ist und dass während des Formens unter Wärme und Druck in der Trommel (22) eine Vulkanisation herbeigeführt wird.

6. Verfahren nach einem der Ansprüche 1 bis 5, **dadurch gekennzeichnet, dass** die Riemenmaterialien M1 und M2 unterschiedliche vulkanisierbare Materialien sind und dass während des Formens unter Wärme und Druck eine Vulkanisation herbeigeführt wird.

7. Endlos-Kraftübertragungsriemen in Form eines Keilriemens oder Keilrippenriemens, erhältlich mit dem Verfahren nach einem der Ansprüche 1 bis 7, **dadurch gekennzeichnet, dass** das die Zugträger (14) einbettende Material M2 zusätzlich einen Grundkörperbereich (15) bildet, der bis in die einzelnen Rippen bzw. den Keil hineinragt.

## Claims

1. A process for producing an endless V-belt or endless ribbed V-belt having low-elasticity tensile members (14) in a molding process, in which a tubular blank (10) having at least two belt material layers (12, 16) and a layer (Z) of tensile members (14) is first produced, which in a subsequent step is molded in a profiling drum (22) under heat and pressure against the profile of the drum, **characterized by** the use of the following layer structure in the blank (10) from the outside inwards:
a) a layer (12) of a belt material M1 for the outermost, rib-side belt profile zone of the belt body (17),
b) a layer (Z) of low-elasticity tensile members (14),
c) a layer (16) of a belt material M2, which is softer compared to M1 and which under the molding conditions has a viscosity which is low enough for the belt material M2 to be pressed through the spaces between the tensile members (14) during the molding process, thereby forming a tensile member embedment,
wherein the belt material M2 is present in the blank (10) in such a quantity and during molding is pressed through to such an extent that after the molding operation some of the belt material M2 forms a belt body area (15) inside the wedge or the ribs, wherein the volumetric ratio between the belt materials M1 and M2 is from 10:90 to 90:5, preferably from 10:90 to 80:20.

2. The process as claimed in claim 1, **characterized in that** high modulus tensile members composed of carbon, aramid, steel, glass or PBO are used as low-elasticity tensile members (14).

3. The process as claimed in claim 1 or 2, **characterized in that** the tensile member layer (Z) is covered at least on one side by a reticulated or latticed overlay.

4. The process as claimed in one of claims 1 to 3, **characterized in that** at least one further layer (18) is applied to the layer (16) of the belt material M2.

5. The process as claimed in one of claims 1 to 4, **characterized in that** at least the belt material M1 is a vulcanizable material, and that during the molding under heat and pressure in the drum (22) a vulcanization is brought about.

6. The process as claimed in one of claims 1 to 5, **characterized in that** the belt materials M1 and M2 are different vulcanizable materials, and that during the molding under heat and pressure a vulcanization is brought about.

7. An endless force-transmission belt in the form of a V-belt or ribbed V-belt, obtainable by the process as claimed in one of claims 1 to 6, **characterized in that** the material M2 embedding the tensile members (14) additionally forms a belt body area (15), which extends into the individual ribs or the wedge.

## Revendications

1. Procédé de fabrication d'une courroie sans fin trapézoïdale ou d'une courroie trapézoïdale à nervures comportant des éléments de traction (14) à faible extensibilité dans un procédé de moulage, dans lequel une préforme tubulaire (10) comportant au moins deux couches de matière de courroie (12, 16) et une couche (Z) d'éléments de traction (14) est ensuite produite, laquelle, dans une étape suivante dans un tambour de profilage (22), est formée à chaud et sous pression contre le profilage du tambour (22), **caractérisé par** l'utilisation de la structure en couches suivante dans la préforme (10) de l'extérieur vers l'intérieur :
a) une couche (12) d'une matière de courroie M1 pour la zone de profil de courroie la plus à l'extérieur, située du côté des nervures, du corps principal (17),
b) une couche (Z) d'éléments de traction (14) de faible élasticité,
c) une couche (16) d'une matière de courroie M2 plus souple par rapport à la matière de courroie M1, laquelle matière possède une viscosité dans les conditions de formes suffisamment faible pour que la matière de courroie M2 soit pressée dans le procédé de moulage par des espaces intermédiaires entre les éléments de traction (14), formant ainsi une insertion d'éléments de traction,
dans lequel la matière de courroie M2 est disponible dans une telle quantité dans la préforme (10) et continue d'être pressée pendant le moulage, de sorte qu'une partie de la matière de courroie M2 forme une région de corps principale (15) dans la clavette ou la nervure après le processus de moulage, le rapport volumique des matières de courroie M1 et M2, l'une par rapport à l'autre, s'élevant de 10:90 à 80:20.

2. Procédé selon la revendication 1, **caractérisé en ce que** des éléments de traction (14) de haut module en carbone, en aramide, en acier, en verre ou en PBO sont utilisées comme éléments de traction (14) de faible élasticité.

3. Procédé selon la revendication 1 ou 2, **caractérisé en ce que** la couche d'éléments de traction (Z) est recouverte, au moins d'un côté, d'un revêtement réticulé ou en forme de grille.

4. Procédé selon l'une quelconque des revendications 1 à 3, **caractérisé en ce qu'**au moins une autre couche (18) est appliquée sur la couche (16) de la matière de courroie M2.

5. Procédé selon l'une quelconque des revendications 1 à 4, **caractérisé en ce qu'**au moins la matière de courroie M1 est une matière vulcanisable, et **en ce qu'**une vulcanisation est provoquée pendant le moulage à chaud et sous pression dans le tambour (22).

6. Procédé selon l'une quelconque des revendications 1 à 5, **caractérisé en ce que** les matières de courroie M1 et M2 sont des matières vulcanisables différentes, et **en ce qu'**une vulcanisation est provoquée pendant le moulage à chaud et sous pression.

7. Courroie sans fin de transmission de puissance sous forme d'une courroie trapézoïdale ou d'une courroie trapézoïdale à nervures, créée par le procédé selon l'une des revendications 1 à 7, **caractérisée en ce que** la matière M2 enrobant les éléments de traction (14) forme en outre une région de corps principal (15), laquelle pénètre jusque dans les nervures uniques ou dans la clavette.
